# EUROPÄISCHE PATENTSCHRIFT

(11) **EP 3 227 580 B1**
(45) Veröffentlichungstag und Bekanntmachung des Hinweises auf die Patenterteilung: **16.10.2019**
(21) Anmeldenummer: 15801875.4
(22) Anmeldetag: 01.12.2015
(51) Int. Cl.: F16F 15/123

(54) **TORSIONSSCHWINGUNGSDÄMPFER**
TORSIONAL VIBRATION DAMPER
AMORTISSEUR DE VIBRATIONS DE TORSION

(30) Priorität: 03.12.2014 DE 102014224815
(43) Veröffentlichungstag der Anmeldung: 11.10.2017
(73) Patentinhaber: Voith Patent GmbH, 89522 Heidenheim (DE)
(72) Erfinder: POLIFKE, Gregor, 89537 Giengen (DE); KOVACEVIC, Miroslav, 89522 Heidenheim (DE); HETZEL, Frank, 73563 Mögglingen (DE); BRENNER, Franz, 89564 Nattheim (DE)
(86) Internationale Anmeldenummer: PCT/EP2015/078148
(87) Internationale Veröffentlichungsnummer: WO 2016/087411

(56) Entgegenhaltungen:
- EP-A- 0 073 594
- EP-A1- 0 286 213
- EP-A1- 2 851 579
- FR-A1- 2 749 898
- US-A- 4 240 532

## Beschreibung

Die vorliegende Erfindung betrifft einen Torsionsschwingungsdämpfer, im Einzelnen mit den Merkmalen aus dem Oberbegriff von Anspruch 1.

Torsionsschwingungsdämpfer werden in Antriebssträngen, beispielsweise von Kraftfahrzeugen, hier insbesondere zwischen dem Antriebsmotor und dem Getriebe, eingesetzt, um Drehschwingungen, die von einem Aggregat im Antriebsstrang, beispielsweise dem Antriebsmotor, erzeugt werden, abzuschwächen oder zu eliminieren, damit diese nicht auf andere Aggregate im Antriebsstrang, beispielsweise das Getriebe, übertragen werden. Hierfür umfassen die Torsionsschwingungsdämpfer wenigstens zwei entgegen der Wirkung einer Dämpfereinrichtung in Umfangsrichtung relativ zueinander verdrehbare Dämpferteile, von denen eines in Abhängigkeit der Antriebsleistungsflussrichtung als Primärteil und das andere als Sekundärteil bezeichnet wird.

Bei einer Bauart von Torsionsschwingungsdämpfern, wie sie die vorliegende Erfindung gemäß eines Ausführungsbeispiels betrifft, ist die Dämpfereinrichtung oder ist eine von mehreren vorgesehenen Dämpfereinrichtungen als Federelement in Gestalt wenigstens einer Druckfeder, insbesondere Zylinderdruckfeder ausgebildet, deren Federachse insbesondere entlang eines Bogens geführt ist, der sich in Umfangsrichtung des Torsionsschwingungsdämpfers erstreckt. Solche Federn werden auch als Bogenfedern bezeichnet. DE 10 2011 015 637 A1 beschreibt ein Ausführungsbeispiel für einen solchen Torsionsschwingungsdämpfer mit einer Vielzahl von Bogenfedern als Federelement, die im Kraftfluss parallel zueinander über dem Umfang des Torsionsschwingungsdämpfers verteilt angeordnet sind und von dem Primärteil und dem Sekundärteil durch relative Verdrehung zueinander mit einer Druckkraft beaufschlagbar sind. Als besondere Gestaltung, wie diese auch gemäß einem Ausführungsbeispiel der vorliegenden Erfindung möglich ist, sind nicht nur mehrere Bogenfedern über dem Umfang verteilt positioniert, sondern es sind auch Bogenfedern mit einem größeren Radius und einem kleineren Radius ineinander geschachtelt, wobei eine der beiden ineinander geschachtelten Bogenfedern insbesondere einen vergleichsweise kürzeren Federweg beziehungsweise eine kürzere Erstreckung in Umfangsrichtung aufweist, sodass sie nur über einem Teil des Federweges der anderen Feder wirkt.

Jede Bogenfeder weist zwei in der Umfangsrichtung voneinander abgewandte Federanlageflächen auf, die sich beide in der Radialrichtung, das heißt in einer Radialebene, des Torsionsschwingungsdämpfers erstrecken. Die Druckbeaufschlagung dieser Federanlageflächen durch entweder das Primärteil oder das Sekundärteil erfolgt mittels ebenfalls in der Radialrichtung, das heißt der Radialebene, ausgerichteten Anlageflächen am Primärteil und Sekundärteil. Das bedeutet, dass beim Verdrehen der Anlagefläche am Primärteil oder Sekundärteil auf die zugewandte gegenüberstehende Federanlagefläche zu sofort ein vollflächiger Kontakt zwischen der Federanlagefläche und der Anlagefläche des Primärteils oder Sekundärteils entsteht oder bereits vorhanden ist, und die Feder unter unveränderter Ausrichtung der Federanlageflächen in der Radialrichtung des Torsionsschwingungsdämpfers über ihrem Federweg zusammengeschoben wird.

Durch diese beim Aufeinandertreffen exakte planparallele Ausrichtung der einen Federanlagefläche und der Primärteilanlagefläche sowie der anderen Federanlagefläche und der Sekundärteilanlagefläche, aufgrund ihrer Ausrichtungen in Radialrichtung des Torsionsschwingungsdämpfers wird in Bezug auf die auftretenden Flächenpressungen eine optimale Kontaktgeometrie zwischen den Federenden, das heißt den Federanlageflächen, und den Federbeaufschlagungsbereichen, das heißt den Anlageflächen im Primärteil und Sekundärteil, erreicht. Allerdings hat sich in der Praxis in manchen Antriebssträngen als nachteilig herausgestellt, dass bei den bekannten Torsionsschwingungsdämpfern eine Unstetigkeit im Federkennlinienverlauf auftritt, wenn die Bogenfedern in Umfangsrichtung zur Einleitung der Druckkraft durch die Anlageflächen im Primärteil und Sekundärteil druckbeaufschlagt werden.

Der vorliegenden Erfindung liegt die Aufgabe zugrunde, einen Torsionsschwingungsdämpfer, insbesondere der eingangs beschriebenen Art mit Bogenfedern, derart zu verbessern, dass die genannten unerwünschten Unstetigkeiten im Federkennlinienverlauf vermieden werden. Insbesondere soll beim Einfederbeginn bei einer Relativverdrehung zwischen dem Primärteil und dem Sekundärteil die Federkennlinie frei von einer Unstetigkeit, wie einer Sprungstelle, sein und stattdessen einen stetigen Kennlinienverlauf aufweisen. Zugleich soll eine einfache und kostengünstige Gestaltung und Herstellung des erfindungsgemäßen Torsionsschwingungsdämpfers möglich sein.

Die erfindungsgemäße Aufgabe wird durch einen Torsionsschwingungsdämpfer mit den Merkmalen von Anspruch 1 gelöst. Einen Torsionsschwingungsdämpfer gemäß des Oberbegriffs des Anspruchs 1 ist in der EP 0 073 594 A beschrieben. In den abhängigen Ansprüchen sind vorteilhafte und besonders zweckmäßige Ausgestaltungen der Erfindung angegeben.

Ein erfindungsgemäßer Torsionsschwingungsdämpfer weist ein Primärteil und ein Sekundärteil auf. Das Primärteil und das Sekundärteil sind entgegen der Kraft wenigstens eines Federelementes in einer Umfangsrichtung des Torsionsschwingungsdämpfers relativ verdrehbar zueinander.

Erfindungsgemäß ist das Federelement als Druckfeder ausgeführt, wobei die Druckfeder zwei in der Umfangsrichtung voneinander abgewandte Federanlageflächen aufweist, nämlich eine erste in eine erste Richtung des Umfangs gewandte Federanlagefläche und eine zweite, in die andere Richtung des Umfangs gewandte Federanlagefläche. Sowohl über die erste Federanlagefläche als auch über die zweite Federanlagefläche ist eine Druckkraft in die Druckfeder einleitbar, je nachdem, in welcher Richtung über dem Umfang des Drehschwingungsdämpfers die Drehschwingung wirkt. Selbstverständlich ist es damit auch möglich, eine Druckkraft von der Druckfeder über die Federanlageflächen auf das Primärteil oder das Sekundärteil zu übertragen.

Das Primärteil weist eine Primärteilanlagefläche auf, die der ersten Federanlagefläche der Druckfeder in der Umfangsrichtung des Torsionsschwingungsdämpfers zugewandt ist und ihr derart gegenübersteht, dass über die Primärteilanlagefläche die Druckkraft durch relative Verdrehung der ersten Federanlagefläche zu der Primärteilanlagefläche oder umgekehrt - das heißt durch eine relative Verdrehung der Primärteilanlagefläche zu der ersten Federanlagefläche - auf die erste Federanlagefläche beaufschlagbar ist. Auch eine entgegengesetzte Richtung der Druckbeaufschlagung ist selbstredend möglich, von der Federanlagefläche auf die Primärteilanlagefläche.

Das Sekundärteil weist eine Sekundärteilanlagefläche auf, die der zweiten Federanlagefläche in der Umfangsrichtung zugewandt ist und ihr derart gegenübersteht, dass über die Sekundärteilanlagefläche die Druckkraft durch relative Verdrehung der zweiten Federanlagefläche zu der Sekundärteilanlagefläche oder umgekehrt - das heißt durch eine relative Verdrehung der Sekundärteilanlagefläche zu der zweiten Federanlagefläche - auf die zweite Federanlagefläche beaufschlagbar ist. Auch hier gilt das oben zur Primärteilanlagefläche gesagte, nämlich die Möglichkeit einer Druckübertragung von der zweiten Federanlagefläche auf die Sekundärteilanlagefläche.

Erfindungsgemäß ist nun der Torsionsschwingungsdämpfer hinsichtlich der Gestaltung und/oder relativen Anordnung zueinander wenigstens eines Paares von Federanlagefläche und Primärteilanlagefläche oder Sekundärteilanlagefläche derart ausgeführt, dass die beiden einander zugewandten und einander gegenüberstehenden Anlageflächen mit zunehmendem Zusammenfahren erst nach und nach, also graduell zur Anlage kommen, sodass bei Einfederungsbeginn der Druckfeder zunächst noch keine flächige Anlage der entsprechenden Federanlagefläche und der zugewandten Primärteilanlagefläche oder Sekundärteilanlagefläche vorliegt, sondern die Druckfeder, bevor diese ihre übliche volle Kraftwirkung aufgrund ihrer Einfederung entwickelt, zunächst nur eine langsam, insbesondere stetig ansteigende Kraftwirkung entfaltet, weil sich zunächst im Wesentlichen nur die Federenden, das heißt ein Teil der Federanlagefläche, gegenüber dem verbleibenden Teil der Federanlagefläche bewegt, bis schließlich bei einem bereits überstrichenen Verdrehwinkel die gesamte Federanlagefläche und die zugeordnete Anlagefläche des Primärteils oder Sekundärteils mehr oder minder vollständig zur Anlage kommen und die Druckfeder, wie bei konventionellen Ausgestaltungen von Torsionsschwingungsdämpfern, mit ihrer üblichen (vollen) Kraft einfedert.

Erreicht wird dies erfindungsgemäß dadurch, dass in einem von der Druckbeaufschlagung freien Zustand, das heißt, dass zwischen der Federanlagefläche und der zugeordneten Anlagefläche des Primärteils oder Sekundärteils noch keine oder im Wesentlichen noch keine Druckkraft übertragen wird, ein Abstand zwischen der Federanlagefläche und der zugeordneten Anlagefläche des Primärteils oder Sekundärteils vorgesehen ist, der sich über den Flächen stufenförmig oder stetig verjüngt. Gemäß einer Ausführungsform kann dabei zwischen jedem Punkt der beiden einander gegenüberstehenden Flächen ein Abstand vorgesehen sein, alternativ können die beiden Anlageflächen zu Beginn der Relativverdrehung bereits an einer Stelle aneinander anliegen.

Die erfindungsgemäße Maßnahme ist bei einem der Anlagepaare oder bei beiden Anlagepaaren möglich. Im Einzelnen ist damit in einem von der Druckbeaufschlagung freien Zustand ein Abstand zwischen der ersten Federanlagefläche und der Primärteilanlagefläche und/oder ein Abstand zwischen der zweiten Federanlagefläche und der Sekundärteilanlagefläche über den Flächen stufenförmig oder stetig verjüngt ausgeführt.

Wenn mit der relativen Verdrehung zwischen dem Primärteil und dem Sekundärteil zunächst ein ausgeprägter vollständiger Abstand zwischen der, je nach Drehrichtung, ersten Federanlagefläche oder zweiten Federanlagefläche und der Primärteilanlagefläche oder Sekundärteilanlagefläche überbrückt beziehungsweise durchfahren werden muss, so wird ein Freihub in der Federkennlinie des Torsionsschwingungsdämpfers zumindest bezüglich der Federkennlinie der wenigstens einen Druckfeder geschaffen. Wenn bereits ein Anliegen der ersten Federanlagefläche an der Primärteilanlagefläche beziehungsweise der zweiten Federanlagefläche an der Sekundärteilanlagefläche zu Beginn der Relativverdrehung zwischen dem Primärteil und dem Sekundärteil gegeben ist, so wirkt mit der Relativverdrehung sofort eine Federkraft der Verdrehung entgegen, wenn auch noch nicht die volle Federkraft.

Vorteilhaft ist das Primärteil und/oder das Sekundärteil als scheibenförmiges oder ringscheibenförmiges Bauteil ausgeführt. Gemäß einer Ausführungsform umschließt eines der beiden Teile das andere in der Umfangsrichtung und/oder in einer Axialrichtung, das heißt in Richtung der Drehachse.

Gemäß einer vorteilhaften Ausführungsform der Erfindung wird der Abstand zwischen der ersten Federanlagefläche und der Primärteilanlagefläche und/oder der Abstand zwischen der zweiten Federanlagefläche und der Sekundärteilanlagefläche durch einen keilförmigen Spalt gebildet. Der Keil kann sich dabei in Radialrichtung nach außen des Torsionsschwingungsdämpfers oder in Radialrichtung nach innen verjüngen. Zusätzlich oder alternativ ist es auch möglich, dass sich der keilförmige Spalt in Axialrichtung des Torsionsschwingungsdämpfers, das heißt in Richtung der Drehachse beziehungsweise parallel zur Richtung der Drehachse, verjüngt, solange die erfindungsgemäße Wirkung bezüglich der allmählichen Beaufschlagung der Federanlagefläche mit zunehmendem Verdrehwinkel des Torsionsschwingungsdämpfers erreicht wird.

Gemäß einer Ausführungsform der Erfindung ist/sind die erste Federanlagefläche, die zweite Federanlagefläche, die Primärteilanlagefläche und/oder die Sekundärteilanlagefläche eben, insbesondere vollständig eben.

Die erste Federanlagefläche, die zweite Federanlagefläche, die Primärteilanlagefläche und/oder die Sekundärteilanlagefläche kann/können vorteilhaft als Kreisfläche, Ringfläche und insbesondere Kreisringfläche ausgeführt sein. Weitere Flächenformen, insbesondere solche, die nur einen Teil einer Kreisringfläche abdecken, sind ebenso möglich.

Günstig ist, wenn sich eine der beiden gegenüberstehenden Anlageflächen von der ersten Federanlagefläche, der zweiten Federanlagefläche, der Primärteilanlagefläche und der Sekundärteilanlagefläche in einer Radialrichtung zu der Drehachse des Torsionsschwingungsdämpfers erstreckt, wohingegen die andere der sich gegenüberstehenden Anlageflächen winklig zu der Radialrichtung (beziehungsweise einer entsprechenden Radialebene) ausgerichtet ist.

Gemäß einer Ausführungsform der Erfindung weist wenigstens eine der beiden sich gegenüberstehenden Anlageflächen von der ersten Federanlagefläche, der zweiten Federanlagefläche, der Primärteilanlagefläche und der Sekundärteilanlagefläche einen Vorsprung auf, der sich nur über einen Teil dieser Anlagefläche erstreckt. Auch hierdurch kann erreicht werden, zusätzlich oder alternativ zu dem keilförmigen Spalt zwischen den Anlageflächen, dass zunächst nur ein Teil der entsprechenden Federanlagefläche mit der Druckkraft beaufschlagt wird, sich relativ zu dem verbleibenden Teil der Federanlagefläche in der Umfangsrichtung mit zunehmendem Verdrehwinkel zwischen dem Primärteil und dem Sekundärteil bewegt und erst nach einer gewissen weiteren Relativverdrehung die gesamte Federanlagefläche zur Übertragung der Druckkraft zum Tragen kommt und damit in die Druckfeder einfedert.

Der Vorsprung kann beispielsweise eine Klotzform, Trapezform, Ringsegmentform oder insbesondere Kreisringsegmentform aufweisen und vorteilhaft auf der Primärteilanlagefläche und/oder der Sekundärteilanlagefläche vorgesehen sein. Zusätzlich oder alternativ ist es jedoch auch möglich, eine oder beide Federanlageflächen mit einem entsprechenden Vorsprung zu gestalten, wobei weder die Anlagefläche des Primärteils oder Sekundärteils noch die Federanlagefläche über ihrem Umfang geschlossen ausgeführt sein muss.

Wenn sich der Abstand zwischen den beiden einander gegenüberstehenden Anlageflächen in einer Radialrichtung zu der Drehachse des Torsionsschwingungsdämpfers verjüngt, so kann der Abstand der sich gegenüberstehenden Anlageflächen vorteilhaft auf einem äußeren Durchmesser der sich gegenüberstehenden Anlageflächen oder auf einem inneren Durchmesser der sich gegenüberstehenden Anlageflächen am größten sein.

Erfindungsgemäß ist die Druckfeder als Bogenfeder ausgeführt, die sich über ihrer gesamten Länge beziehungsweise Einfederlänge in der Umfangsrichtung des Torsionsschwingungsdämpfers erstreckt.

Gemäß einer vorteilhaften Ausführungsform der Erfindung sind eine Vielzahl entsprechender Druckfedern mit entsprechenden Federanlageflächen und zugeordneten Anlageflächen des Primärteils und des Sekundärteils über der Umfangsrichtung des Torsionsschwingungsdämpfers hintereinander angeordnet, jedoch im Kraftfluss parallel zueinander vorgesehen. Dies bedeutet, dass die verschiedenen Druckfedern mehr oder minder gleichzeitig einfedern bei einer Relativverdrehung zwischen dem Primärteil und dem Sekundärteil.

Je nach Anwendungsbereich sind weitere Dämpfungseinrichtungen im Torsionsschwingungsdämpfer vorgesehen, beispielsweise in Form wenigstens einer Reibdämpfungseinrichtung, hydraulischer Dämpfungseinrichtung und/oder Federeinrichtung. Diese genannte wenigstens eine zusätzliche Feder- und/oder Dämpfungseinrichtung kann im Kraftfluss zu den beschriebenen Druckfedern parallel oder in Reihe geschaltet sein.

Die erfindungsgemäße Lösung erlaubt in besonders vorteilhafter Weise ein zumindest zu Beginn des Einfederbereiches oder über dem gesamten Federbereich sprungstellenfreies Federverhalten, wobei die erfindungsgemäße Maßnahme mit einfach herstellbaren Bauteilen und insbesondere ohne gegenüber konventionellen Dämpfern zusätzliche Bauteile erreicht wird. Zur weiteren Festigkeitssteigerung und zum Verschleißschutz können zumindest die Federanlageflächen im Primärteil und/oder Sekundärteil wärmebehandelt sein oder aber zusätzliche wärmebehandelte und einfach herstellbare Bauteile, zum Beispiel Blechumformbauteile, form- und/oder kraftschlüssig verbunden tragen. Auch die Federn können mit entsprechenden Bauteilen ausgerüstet sein, wenn dies gewünscht ist.

Die erfindungsgemäße Lösung ist in vorteilhafterweise für jegliche Ausführung scheibenförmiger Dämpferteile mit einer in Umfangsrichtung zur Kraftaufnahme ausgerichteten Anlagefläche einsetzbar. Dabei kann die Anlagefläche durch einen radial nach außen und/oder radial nach innen vom Primärteil und/oder Sekundärteil hervorstehenden Fortsatz gebildet werden, wobei bei Vorsehen mehrerer über der Umfangsrichtung beabstandet zueinander vorgesehener Anlageflächen die einzelnen in Umfangsrichtung zueinander beabstandet angeordneten radialen Fortsätze eine randoffene Aussparung zur Aufnahme der Druckfedern beschreiben. Beispielsweise ist die Aussparung radial nach außen geöffnet, sodass die wenigstens eine Druckfeder nicht in Umfangsrichtung auf der radialen Außenseite von einem an dem radial nach außen hervorstehenden Fortsatz angeschlossenen in Umfangsrichtung verlaufenden Fortsatz oder Steg überdeckt wird. Alternativ ist jedoch hier ein solcher sich in Umfangsrichtung erstreckender Fortsatz, der das jeweilige Federende übergreift, vorgesehen. Wenn sich dieser Fortsatz über die gesamte Feder hinweg erstreckt, wird er vorliegend als Steg bezeichnet, was gemäß einer Ausführungsform ebenfalls möglich ist, sodass die beiden sich radial nach außen erstreckenden Fortsätze, welche eine Druckfeder in Umfangsrichtung zwischen sich einschließen, durch den Steg verbunden sind.

Gemäß einer Ausführungsform der Erfindung umfasst das Primärteil oder das Sekundärteil zwei Seitenscheiben, zwischen denen in Axialrichtung eine Mittelscheibe des jeweils anderen Teils - Sekundärteil oder Primärteil - angeordnet ist. Die Anlageflächen für die Druckbeaufschlagung der Feder oder Federn werden dann vorteilhaft durch eine oder beide Seitenscheiben ausgebildet und vom anderen Teil durch die Mittelscheibe.

Die Erfindung soll nachfolgend anhand von Ausführungsbeispielen und den Figuren exemplarisch beschrieben werden.

Es zeigen:
- Figur 1: eine Federkennlinie eines Torsionsschwingungsdämpfers mit einer Sprungstelle beim Einfederungsbeginn gemäß dem Stand der Technik;
- Figur 2: eine Federkennlinie mit stetigem Verlauf beim Einfederungsbeginn gemäß einem erfindungsgemäß ausgeführten Torsionsschwingungsdämpfer;
- Figur 3: eine Federkennlinie gemäß dem Stand der Technik mit Sprungstelle beim Einfederungsbeginn entsprechend der Figur 1, jedoch mit einem Freihub in der Federkennlinie;
- Figur 4: eine Federkennlinie eines erfindungsgemäßen Torsionsschwingungsdämpfers ähnlich der Figur 3, jedoch mit stetigem Verlauf beim Einfederungsbeginn;
- Figur 5: einen schematischen Querschnitt durch einen Ausschnitt am ersten Federende eines erfindungsgemäß ausgeführten Torsionsschwingungsdämpfers gemäß einem ersten Ausführungsbeispiel;
- Figur 6: ein Ausführungsbeispiel gemäß der Figur 5 jedoch mit in anderer radialer Richtung verjüngt ausgeführtem Ringspalt an einem zweiten Federende;
- Figur 7: eine schematische Darstellung eines Torsionsschwingungsdämpfers ohne Freihub in der Federkennlinie entsprechend den Figuren 5 und 6;
- Figur 8: eine Darstellung gemäß der Figur 7 jedoch mit Freihub in der Federkennlinie;
- Figur 9: ein Ausführungsbeispiel mit derselben Wirkung wie jenes der Figur 6, jedoch erreicht durch einen Vorsprung an der Anlagefläche des Primärteils oder Sekundärteils;
- Figur 10: eine Draufsicht auf die Anlagefläche aus der Figur 9;
- Figur 11: eine schematische Darstellung eines erfindungsgemäß ausgeführten Torsionsschwingungsdämpfers mit ineinander geschachtelten Federn;
- Figur 12: eine Ausführungsform mit zwei in Radialrichtung übereinander positionierten Federn.

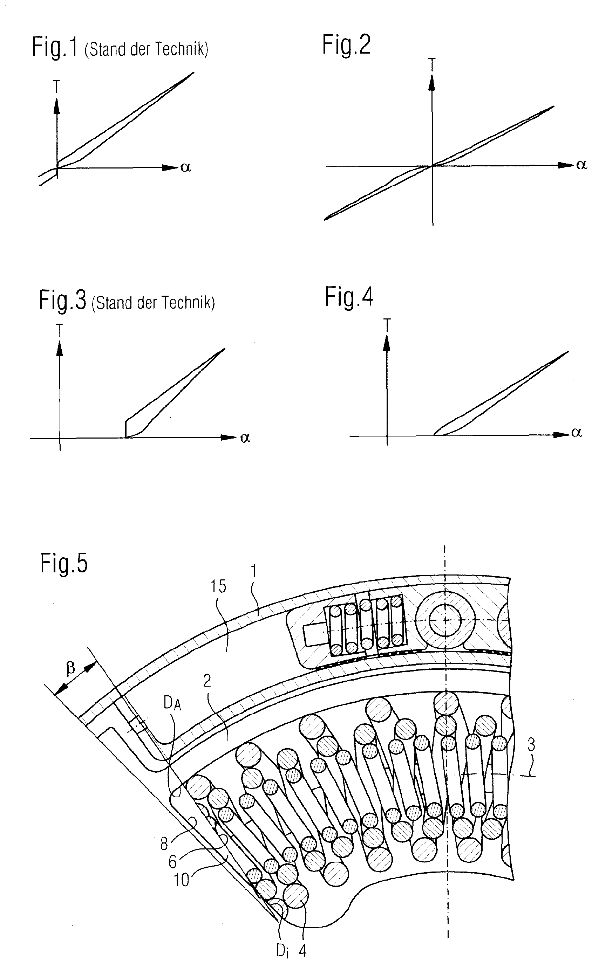

Figur 1 zeigt einen unstetigen Verlauf einer Federkennlinie, dargestellt als wirksames Drehmoment T über dem Relativerdrehwinkel α zwischen einem hier nicht näher bezeichneten Primärteil und Sekundärteil eines Torsionsschwingungsdämpfers gemäß dem Stand der Technik. Die Unstetigkeit im Verlauf wird dadurch hervorgerufen, dass bei Einfederungsbeginn sofort die volle Kraftwirkung der Federn einsetzt, weil die Federenden mit ihren Federanlageflächen und die Anlageflächen des Primärteils und Sekundärteils in allen Betriebszuständen flächig aneinander anliegen. Die wirksame Stärke der Unstetigkeitsstelle erhöht sich, wenn die Federn zwischen den Primärteilanlageflächen und Sekundärteilanlageflächen mit Vorspannung eingelegt sind.

Die Figur 3 zeigt einen entsprechenden unstetigen Verlauf einer Federkennlinie gemäß einem Torsionsschwingungsdämpfer nach dem Stand der Technik, mit dem Unterschied, dass dieser Torsionsschwingungsdämpfer mit einem Freihub versehen ist, das heißt, bevor die Federn einfedern, muss ein bestimmter Relativverdrehwinkel α zwischen dem Primärteil und dem Sekundärteil bereits überwunden worden sein. Auch hier liegen die Federanlageflächen nach Überwindung des Freihubs jedoch sofort vollflächig an der entsprechenden Primärteilanlagefläche und Sekundärteilanlagefläche an, sodass sich die Sprungstelle ergibt.

Die Figuren 2 und 4 zeigen hingegen beispielhaft Federkennlinien von entsprechenden Torsionsschwingungsdämpfern mit und ohne Freihub, wobei die Torsionsschwingungsdämpfer erfindungsgemäß ausgeführt sind, sodass es mit zunehmendem Relativverdrehwinkel α erst sukzessive nach Überwindung eines Freihubs oder auch direkt zur Anlage der Federanlageflächen und der entsprechenden Primärteilanlagefläche beziehungsweise Sekundärteilanlagefläche kommt.

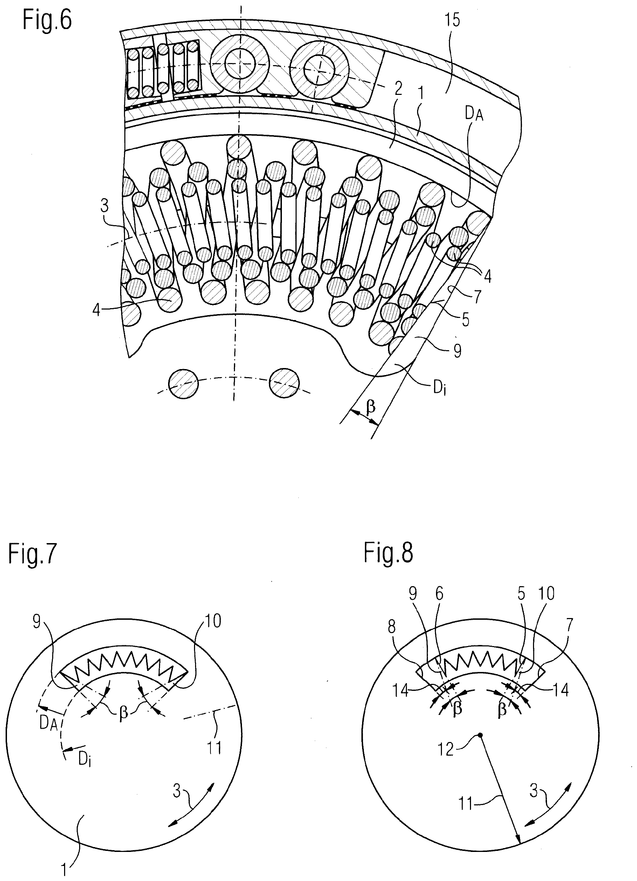

In den Figuren 5 und 6 sind nun Ausführungsbeispiele der Erfindung dargestellt, bei welchen das sukzessive Anliegen der Federanlageflächen 5, 6 der Druckfedern 4 (hier ist nur eine Druckfeder des Pakets von ineinander geschachtelten Federn mit 4 beziffert) an der Primärteilanlagefläche 7 beziehungsweise der Sekundärteilanlagefläche 8 durch eine relative Schrägstellung der sich gegenüberstehenden Anlageflächen 5, 7 beziehungsweise 6, 8, in anderen Worten einen durch einen keilförmigen Spalt gebildeten Abstand 9, 10 erreicht wird.

Der an dem ersten Federende gezeigte Winkel zwischen der ersten Federanlagefläche 5 und der Primärteilanlagefläche 7, hier mit β bezeichnet, weist auf dem äußeren Durchmesser D_{A} der sich gegenüberstehenden Anlageflächen 5, 7 den kleinsten Abstand 10, nämlich den Abstand Null, und auf dem inneren Durchmesser D_{I} der sich gegenüberstehenden Anlageflächen 5, 7 den größten Abstand 10 auf. Somit gibt es bei diesem Ausführungsbeispiel keinen Freihub in der Federkennlinie des Torsionsschwingungsdämpfers.

In dem gezeigten Ausführungsbeispiel sind drei Federn 4 ineinander geschachtelt, die alle in der erfindungsgemäßen Zuordnung beziehungsweise in der erfindungsgemäßen Gestaltung bezüglich ihrer Anlage am Primärteil 1 oder Sekundärteil 2 gestaltet sein können. Gemäß einem anderen Ausführungsbeispiel ist jedoch nur eine Feder oder sind nur zwei Federn 4 entsprechend gestaltet.

Beim gezeigten Ausführungsbeispiel ist ferner neben den Druckfedern 4 eine weitere Dämpfungseinrichtung zwischen dem Primärteil 1 und dem Sekundärteil 2 vorgesehen, nämlich eine hydraulische Dämpfungseinrichtung 15, die parallel zu den Druckfedern 4 wirkt, entweder auf demselben "Federweg" oder bei anderen Relativverdrehwinkeln zwischen dem Primärteil 1 und dem Sekundärteil 2.

Am anderen Federende ist der Abstand 10 zwischen der zweiten Federanlagefläche 6 und der Sekundärteilanlagefläche 8 mit dem vergleichsweise größten Abstand am Außendurchmesser D_{A} und mit dem kleinsten Abstand, auch hier dem Abstand Null, am Innendurchmesser D_{I} gezeigt, siehe die Figur 5. Bei beiden Ausführungsbeispielen in den Figuren 5 und 6, welche auch kombiniert werden können, sind die Druckfedern 4 als Bogenfedern ausgeführt und erstrecken sich entlang der Umfangsrichtung 3.

Die erste Federanlagefläche 5, die zweite Federanlagefläche 6, die Primärteilanlagefläche 7 und die Sekundärteilanlagefläche 8 sind alle eben ausgeführt.

In den Figuren 7 und 8 sind nochmals Ausführungsbeispiele ähnlich der Figur 6 gezeigt, siehe die Winkel β, wobei beim Ausführungsbeispiel der Figur 8 zusätzlich ein Freihub 14 in der Umfangsrichtung 3 vorgesehen ist, gebildet durch einen Abstand zwischen der ersten Federanlagefläche 5 und der Primärteilanlagefläche 7 sowie der zweiten Federanlagefläche 6 und der Sekundärteilanlagefläche 8 im noch nicht verdrehten Zustand zwischen dem Primärteil 1 und dem hier nicht näher dargestellten Sekundärteil 2. Erst wenn dieser Freihub 14, das heißt die Summe der beiden hier gezeigten Freihübe 14 auf beiden Enden der Druckfeder 4 durch eine Relativverdrehung zwischen dem Primärteil 1 und dem Sekundärteil 2 überwunden sind, beginnt die erfindungsgemäße Anlage der Federanlageflächen 5, 6 mit der Primärteilanlagefläche 7 beziehungsweise der Sekundärteilanlagefläche 8.

In der Figur 8 sind ferner weitere geometrische Linien des Torsionsschwingungsdämpfers angezeigt, nämlich die Radialrichtung 11 und die Drehachse 12.

Der Winkel β gemäß den Ausführungsbeispielen in den Figuren 5 bis 8 oder auch bei ähnlichen Ausführungsformen kann beispielsweise > 0° bis 20°, vorteilhaft > 0° bis 15° und insbesondere vorteilhaft von 5° bis 10° betragen.

Grundsätzlich können an den beiden Federenden gleiche Winkel β oder verschiedene Winkel, auch bezüglich der Winkelrichtung ausgeführt sein. Auch andere Maßnahmen, um die gewünschten ungleichmäßigen Abstände im nicht verdrehten Zustand zwischen den Federanlageflächen 5, 6 und den Anlageflächen 7, 8 zu erreichen, können an beiden Federenden identisch beziehungsweise symmetrisch oder ungleich ausgeführt sein. Auch kann eine solche Maßnahme nur an einem Federende vorgesehen sein. Die Auswahl hierfür erfolgt anhand der Funktionsanforderung des Antriebsstranges, in welchem der Torsionsschwingungsdämpfer eingesetzt wird, je nachdem, ob die Einfederverhältnisse zwischen der Zug- und der Schubseite des Torsionsschwingungsdämpfers gleich oder unterschiedlich sein sollen. In einem Kraftfahrzeugantriebsstrang zieht bei der Zugseite der Motor das Fahrzeug, während im Schubbetrieb das Fahrzeug über seine träge Bewegungsmasse den Kraftfluss in Richtung des Motors führt.

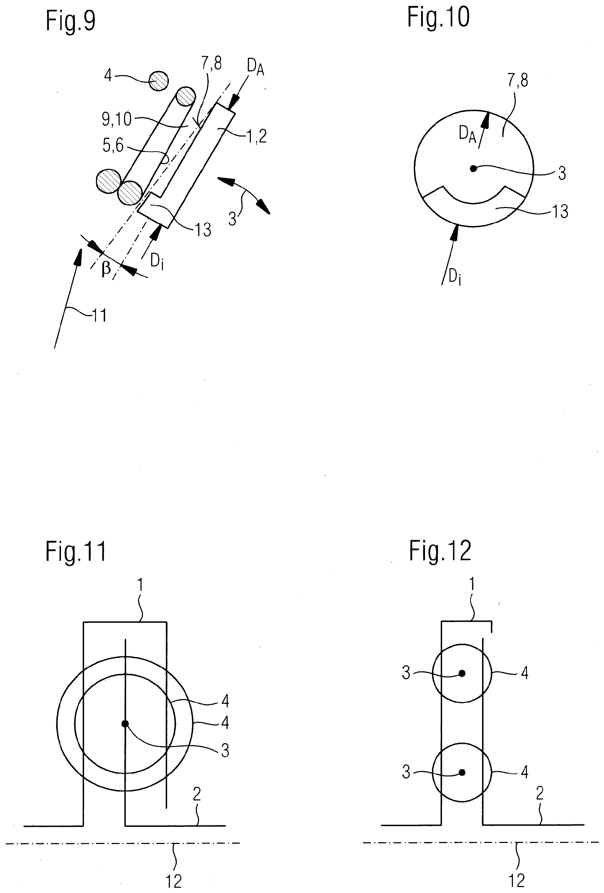

In den Figuren 9 und 10 ist beispielhaft eine Maßnahme dargestellt, bei welcher eine Wirkung entsprechend des Winkels β durch einen Vorsprung 13 auf der Primärteilanlagefläche 7 oder Sekundärteilanlagefläche 8 erreicht, der zuerst an der ersten Federanlagefläche 5 oder der zweiten Federanlagefläche 6 anstößt, wenn das Primärteil 1 relativ gegenüber dem Sekundärteil 2 in der Umfangsrichtung 3 verdreht wird. Selbstverständlich könnte ein solcher Vorsprung 13 auch an der ersten Federanlagefläche 5 oder der zweiten Federanlagefläche 6 anstelle oder zusätzlich zu dem Vorsprung 13 an der Primärteilanlagefläche 7 oder der Sekundärteilanlagefläche 8 vorgesehen sein. Im gezeigten Ausführungsbeispiel ist der Vorsprung 13 ringsegmentförmig.

In der Figur 11 ist nochmals ein Beispiel für zwei ineinander geschachtelte Federn 4 dargestellt, wohingegen gemäß dem Ausführungsbeispiel bei der Figur 12 die Druckfedern 4 radial außerhalb voneinander vorgesehen sind. Auch diese beiden Ausführungsbeispiele könnten miteinander kombiniert werden.

## Patentansprüche

1. Torsionsschwingungsdämpfer
1.1 mit einem Primärteil (1);
1.2 mit einem Sekundärteil (2), das entgegen der Kraft wenigstens eines Federelementes in einer Umfangsrichtung (3) relativ zu dem Primärteil (1) verdrehbar ist; wobei
1.3 das Federelement als Druckfeder (4) ausgeführt ist, die zwei in der Umfangsrichtung (3) voneinander abgewandte Federanlageflächen (5, 6) aufweist, nämlich eine erste Federanlagefläche (5), über welche eine Druckkraft in der Umfangsrichtung (3) in die Druckfeder (4) einleitbar ist, und eine zweite Federanlagefläche (6), über welche eine Druckkraft in der Umfangsrichtung (3) in die Druckfeder (4) einleitbar ist; wobei
1.4 das Primärteil (1) eine Primärteilanlagefläche (7) aufweist, die der ersten Federanlagefläche (5) in der Umfangsrichtung (3) zugewandt ist und derart gegenübersteht, dass über der Primärteilanlagefläche (7) die Druckkraft durch relative Verdrehung der ersten Federanlagefläche (5) zu der Primärteilanlagefläche (7) oder umgekehrt auf die erste Federanlagefläche (5) beaufschlagbar ist, und
1.5 das Sekundärteil (2) eine Sekundärteilanlagefläche (8) aufweist, die der zweiten Federanlagefläche (6) in der Umfangsrichtung (3) zugewandt ist und derart gegenübersteht, dass über die Sekundärteilanlagefläche (8) die Druckkraft durch relative Verdrehung der zweiten Federanlagefläche (6) zu der Sekundärteilanlagefläche (8) oder umgekehrt auf die zweite Federanlagefläche (6) beaufschlagbar ist; und
1.6 in einem von der Druckbeaufschlagung freien Zustand ein Abstand (9) zwischen der ersten Federanlagefläche (5) und der Primärteilanlagefläche (7) und/oder ein Abstand (10) zwischen der zweiten Federanlagefläche (6) und der Sekundärteilanlagefläche (8) über den Flächen stufenförmig oder stetig verjüngt ausgeführt ist.
**dadurch gekennzeichnet, dass**
die Druckfeder (4) als Bogenfeder ausgeführt ist, die sich über ihrer gesamten Länge in der Umfangsrichtung (3) erstreckt.

2. Torsionsschwingungsdämpfer gemäß Anspruch 1, **dadurch gekennzeichnet, dass** der Abstand (9, 10) durch einen keilförmigen Spalt gebildet wird.

3. Torsionsschwingungsdämpfer gemäß einem der Ansprüche 1 oder 2, **dadurch gekennzeichnet, dass** die erste Federanlagefläche (5), die zweite Federanlagefläche (6), die Primärteilanlagefläche (7) und/oder die Sekundärteilanlagefläche (8) eben ist/sind.

4. Torsionsschwingungsdämpfer gemäß einem der Ansprüche 1 bis 3, **dadurch gekennzeichnet, dass** die erste Federanlagefläche (5), die zweite Federanlagefläche (6), die Primärteilanlagefläche (7) und/oder die Sekundärteilanlagefläche (8) als Ringfläche, insbesondere Kreisringfläche ausgeführt ist/sind.

5. Torsionsschwingungsdämpfer gemäß einem der Ansprüche 1 bis 4, **dadurch gekennzeichnet, dass** sich eine der beiden sich gegenüberstehenden Anlageflächen von der ersten Federanlagefläche (5), der zweiten Federanlagefläche (6), der Primärteilanlagefläche (7) und der Sekundärteilanlagefläche (8) in einer Radialrichtung (11) zu einer Drehachse (12) des Torsionsschwingungsdämpfers erstreckt und die andere der sich gegenüberstehenden Anlageflächen (5, 6, 7, 8) winklig zu der Radialrichtung (11) ausgerichtet ist.

6. Torsionsschwingungsdämpfer gemäß einem der Ansprüche 1 bis 5, **dadurch gekennzeichnet, dass** wenigstens eine der beiden sich gegenüberstehenden Anlageflächen von der ersten Federanlagefläche (5), der zweiten Federanlagefläche (6), der Primärteilanlagefläche (7) und der Sekundärteilanlagefläche (8) einen Vorsprung (13) aufweist, der sich nur über einen Teil der Anlagefläche (5, 6, 7, 8) erstreckt.

7. Torsionsschwingungsdämpfer gemäß Anspruch 6, **dadurch gekennzeichnet, dass** der Vorsprung (13) eine Ringsegmentform, insbesondere Kreisringsegmentform aufweist und insbesondere auf der Primärteilanlagefläche (7) und/oder der Sekundärteilanlagefläche (8) vorgesehen ist.

8. Torsionsschwingungsdämpfer gemäß einem der Ansprüche 1 bis 7, **dadurch gekennzeichnet, dass** sich der Abstand (9, 10) in einer Radialrichtung (11) zu einer Drehachse (12) des Torsionsschwingungsdämpfers verjüngt.

9. Torsionsschwingungsdämpfer gemäß Anspruch 8, **dadurch gekennzeichnet, dass** der Abstand (9, 10) auf einem äußeren Durchmesser (D_{A}) der sich gegenüberstehenden Anlageflächen (5, 6, 7, 8) am kleinsten ist und insbesondere auf einem inneren Durchmesser (D_{I}) am größten ist.

10. Torsionsschwingungsdämpfer gemäß Anspruch 8, **dadurch gekennzeichnet, dass** der Abstand (9, 10) auf einem äußeren Durchmesser (D_{A}) der sich gegenüberstehenden Anlageflächen (5, 6, 7, 8) am größten ist und insbesondere auf einem inneren Durchmesser (D_{I}) am kleinsten ist.

11. Torsionsschwingungsdämpfer gemäß einem der Ansprüche 1 bis 10, **dadurch gekennzeichnet, dass** in dem von der Druckbeaufschlagung freien Zustand der Abstand (9, 10) sich auf das Maß Null verjüngt.

12. Torsionsschwingungsdämpfer gemäß einem der Ansprüche 1 bis 10, **dadurch gekennzeichnet, dass** in dem von der Druckbeaufschlagung freien Zustand der Abstand (9, 10) über den sich gesamten gegenüberstehenden Anlageflächen (5, 6, 7, 8) größer als Null ist.

13. Torsionsschwingungsdämpfer gemäß einem der Ansprüche 1 bis 12, **dadurch gekennzeichnet, dass** eine Vielzahl der Druckfedern (4) über der Umfangsrichtung (3) hintereinander, jedoch im Kraftfluss parallel zueinander vorgesehen sind.

14. Torsionsschwingungsdämpfer gemäß einem der Ansprüche 1 bis 12, **dadurch gekennzeichnet, dass** im Kraftfluss in Reihe oder parallel zu der wenigstens einen Druckfeder (4) geschaltet wenigstens eine weitere Feder- und/oder Dämpfungseinrichtung vorgesehen ist, insbesondere in Form einer Reibdämpfungseinrichtung, hydraulischen Dämpfungseinrichtung (15) und/oder Federeinrichtung.

## Claims

1. Torsional vibration damper
1.1 with a primary part (1);
1.2 with a secondary part (2), which can be turned relative to the primary part (1) in a circumferential direction (3) against the force of at least one spring element; wherein
1.3 the spring element is designed as a compression spring (4), which has two spring contact surfaces (5, 6) facing away from one another in the circumferential direction (3), to be specific a first spring contact surface (5), by way of which a compressive force can be introduced into the compression spring (4) in the circumferential direction (3), and a second spring contact surface (6), by way of which a compressive force can be introduced into the compression spring (4) in the circumferential direction (3); wherein
1.4 the primary part (1) has a primary part contact surface (7), which is facing the first spring contact surface (5) in the circumferential direction (3) and lies opposite it in such a way that, by relative turning of the first spring contact surface (5) in relation to the primary part contact surface (7), or vice versa, the compressive force can be applied to the first spring contact surface (5) by way of the primary contact surface (7), and
1.5 the secondary part (2) has a secondary part contact surface (8), which is facing the second spring contact surface (6) in the circumferential direction (3) and lies opposite it in such a way that, by relative turning of the second spring contact surface (6) in relation to the secondary part contact surface (8), or vice versa, the compressive force can be applied to the second spring contact surface (6) by way of the secondary part contact surface (8); and
1.6 in a state in which the pressure is not applied, a spacing (9) between the first spring contact surface (5) and the primary part contact surface (7) and/or a spacing (10) between the second spring contact surface (6) and the secondary part contact surface (8) is formed by way of the surfaces in a step-shaped or steadily tapering manner,
**characterized in that**
the compression spring (4) is formed as a bow spring, which extends over its entire length in the circumferential direction (3).

2. Torsional vibration damper according to Claim 1, **characterized in that** the spacing (9, 10) is formed by a wedge-shaped gap.

3. Torsional vibration damper according to either of Claims 1 and 2, **characterized in that** the first spring contact surface (5), the second spring contact surface (6), the primary part contact surface (7) and/or the secondary part contact surface (8) is/are planar.

4. Torsional vibration damper according to one of Claims 1 to 3, **characterized in that** the first spring contact surface (5), the second spring contact surface (6), the primary part contact surface (7) and/or the secondary part contact surface (8) is/are formed as an annular surface, in particular a circular annular surface.

5. Torsional vibration damper according to one of Claims 1 to 4, **characterized in that** one of the two mutually opposing contact surfaces of the first spring contact surface (5), the second spring contact surface (6), the primary part contact surface (7) and the secondary part contact surface (8) extends in a radial direction (11) in relation to an axis of rotation (12) of the torsional vibration damper and the other of the mutually opposing contact surfaces (5, 6, 7, 8) is aligned at an angle to the radial direction (11).

6. Torsional vibration damper according to one of Claims 1 to 5, **characterized in that** at least one of the two mutually opposing contact surfaces of the first spring contact surface (5), the second spring contact surface (6), the primary part contact surface (7) and the secondary part contact surface (8) has a projection (13), which only extends over part of the contact surface (5, 6, 7, 8).

7. Torsional vibration damper according to Claim 6, **characterized in that** the projection (13) has the form of an annular segment, in particular the form of a circular annular segment, and in particular is provided on the primary part contact surface (7) and/or the secondary part contact surface (8).

8. Torsional vibration damper according to one of Claims 1 to 7, **characterized in that** the spacing (9, 10) tapers in a radial direction (11) in relation to an axis of rotation (12) of the torsional vibration damper.

9. Torsional vibration damper according to Claim 8, **characterized in that** the spacing (9, 10) is smallest on an outer diameter (D_{A}) of the mutually opposing contact surfaces (5, 6, 7, 8) and in particular is greatest on an inner diameter (D_{I}).

10. Torsional vibration damper according to Claim 8, **characterized in that** the spacing (9, 10) is greatest on an outer diameter (D_{A}) of the mutually opposing contact surfaces (5, 6, 7, 8) and in particular is smallest on an inner diameter (D_{I}).

11. Torsional vibration damper according to one of Claims 1 to 10, **characterized in that**, in the state in which the pressure is not applied, the spacing (9, 10) tapers to the value of zero.

12. Torsional vibration damper according to one of claims 1 to 10, **characterized in that**, in the state in which the pressure is not applied, the spacing (9, 10) is greater than zero over the entire mutually opposing contact surfaces (5, 6, 7, 8).

13. Torsional vibration damper according to one of Claims 1 to 12, **characterized in that** a multiplicity of the compression springs (4) are provided one behind the other over the circumferential direction (3), but parallel to one another in the flux of force.

14. Torsional vibration damper according to one of Claims 1 to 12, **characterized in that** at least one further spring device and/or damping device, in particular in the form of a friction damping device, hydraulic damping device (15) and/or spring device, is provided in series or parallel to the at least one compression spring (4) in the flux of force.

## Revendications

1. Amortisseur de vibrations de torsion
1.1 comprenant une partie primaire (1) ;
1.2 comprenant une partie secondaire (2) qui peut être tournée en s'opposant à la force d'au moins un élément ressort dans une direction périphérique (3) par rapport à la partie primaire (1) ;
1.3 l'élément ressort étant réalisé sous la forme d'un ressort de compression (4) qui possède deux surfaces d'appui de ressort (5, 6) opposées l'une à l'autre dans la direction périphérique (3), à savoir une première surface d'appui de ressort (5), par le biais de laquelle une force de compression peut être induite dans la direction périphérique (3) dans le ressort de compression (4), et une deuxième surface d'appui de ressort (6), par le biais de laquelle une force de compression peut être induite dans la direction périphérique (3) dans le ressort de compression (4) ;
1.4 la partie primaire (1) possédant une surface d'appui de partie primaire (7), qui fait face à la première surface d'appui de ressort (5) dans la direction périphérique (3) et se trouve en vis-à-vis de celle-ci de telle sorte que la force de compression peut être appliquée à la première surface d'appui de ressort (5) par le biais de la surface d'appui de partie primaire (7) par une rotation relative de la première surface d'appui de ressort (5) par rapport à la surface d'appui de partie primaire (7) ou inversement, et
1.5 la partie secondaire (2) possédant une surface d'appui de partie secondaire (8), qui fait face à la deuxième surface d'appui de ressort (6) dans la direction périphérique (3) et se trouve en vis-à-vis de celle-ci de telle sorte que la force de compression peut être appliquée à la deuxième surface d'appui de ressort (6) par le biais de la surface d'appui de partie secondaire (8) par une rotation relative de la deuxième surface d'appui de ressort (6) par rapport à la surface d'appui de partie secondaire (8) ou inversement ; et
1.6 dans un état libre de contrainte de compression, un écart (9) entre la première surface d'appui de ressort (5) et la surface d'appui de partie primaire (7) et/ou un écart (10) entre la deuxième surface d'appui de ressort (6) et la surface d'appui de partie secondaire (8) est réalisé pour se réduire en gradins ou continuellement sur les surfaces,
**caractérisé en ce que**
le ressort de compression (4) est réalisé sous la forme d'un ressort en arc qui s'étend sur toute sa longueur dans la direction périphérique (3).

2. Amortisseur de vibrations de torsion selon la revendication 1, **caractérisé en ce que** l'écart (9, 10) est formé par un interstice cunéiforme.

3. Amortisseur de vibrations de torsion selon l'une des revendications 1 ou 2, **caractérisé en ce que** la première surface d'appui de ressort (5), la deuxième surface d'appui de ressort (6), la surface d'appui de partie primaire (7) et/ou la surface d'appui de partie secondaire (8) est/sont plane(s).

4. Amortisseur de vibrations de torsion selon l'une des revendications 1 à 3, **caractérisé en ce que** la première surface d'appui de ressort (5), la deuxième surface d'appui de ressort (6), la surface d'appui de partie primaire (7) et/ou la surface d'appui de partie secondaire (8) est/sont réalisée(s) sous la forme d'une surface annulaire, notamment une surface torique.

5. Amortisseur de vibrations de torsion selon l'une des revendications 1 à 4, **caractérisé en ce que** l'une des deux surfaces d'appui en vis-à-vis de la première surface d'appui de ressort (5), de la deuxième surface d'appui de ressort (6), de la surface d'appui de partie primaire (7) et de la surface d'appui de partie secondaire (8) s'étend dans une direction radiale (11) par rapport à un axe de rotation (12) de l'amortisseur de vibrations de torsion et l'autre des surfaces d'appui (5, 6, 7, 8) en vis-à-vis est orientée angulairement à la direction radiale (11).

6. Amortisseur de vibrations de torsion selon l'une des revendications 1 à 5, **caractérisé en ce qu'**au moins l'une des deux surfaces d'appui en vis-à-vis de la première surface d'appui de ressort (5), de la deuxième surface d'appui de ressort (6), de la surface d'appui de partie primaire (7) et de la surface d'appui de partie secondaire (8) possède une partie saillante (13) qui s'étend seulement sur une partie de la surface d'appui (5, 6, 7, 8).

7. Amortisseur de vibrations de torsion selon la revendication 6, **caractérisé en ce que** la partie saillante (13) possède une forme de segment d'anneau, notamment une forme de segment de tore, et se trouve notamment sur la surface d'appui de partie primaire (7) et/ou la surface d'appui de partie secondaire (8).

8. Amortisseur de vibrations de torsion selon l'une des revendications 1 à 7, **caractérisé en ce que** l'écart (9, 10) se réduit dans une direction radiale (11) par rapport à un axe de rotation (12) de l'amortisseur de vibrations de torsion.

9. Amortisseur de vibrations de torsion selon la revendication 8, **caractérisé en ce que** l'écart (9, 10) est le plus petit sur un diamètre extérieur (D_{A}) des surfaces d'appui (5, 6, 7, 8) en vis-à-vis et notamment est le plus grand sur un diamètre intérieur (D_{I}).

10. Amortisseur de vibrations de torsion selon la revendication 8, **caractérisé en ce que** l'écart (9, 10) est le plus grand sur un diamètre extérieur (D_{A}) des surfaces d'appui (5, 6, 7, 8) en vis-à-vis et notamment est le plus petit sur un diamètre intérieur (D_{I}).

11. Amortisseur de vibrations de torsion selon l'une des revendications 1 à 10, **caractérisé en ce que** dans l'état libre de contrainte de compression, l'écart (9, 10) se réduit à la cote zéro.

12. Amortisseur de vibrations de torsion selon l'une des revendications 1 à 10, **caractérisé en ce que** dans l'état libre de contrainte de compression, l'écart (9, 10) est supérieur à zéro sur toutes les surfaces d'appui (5, 6, 7, 8) en vis-à-vis.

13. Amortisseur de vibrations de torsion selon l'une des revendications 1 à 12, **caractérisé en ce qu'**une pluralité des ressorts de compression (4) se trouvent les uns derrière les autres dans la direction périphérique (3), toutefois parallèles les uns aux autres dans le flux de force.

14. Amortisseur de vibrations de torsion selon l'une des revendications 1 à 12, **caractérisé en ce qu'**au moins un dispositif à ressort et/ou amortisseur supplémentaire se trouve dans le flux de force monté en série ou en parallèle avec l'au moins un ressort de compression (4), notamment sous la forme d'un dispositif d'amortissement par friction, un dispositif d'amortissement hydraulique (15) et/ou un dispositif à ressort.
